# EUROPÄISCHE PATENTANMELDUNG

(11) **EP 3 181 851 A1**
(43) Veröffentlichungstag der Anmeldung: **21.06.2017**
(21) Anmeldenummer: 16199935.4
(22) Anmeldetag: 22.11.2016
(51) Int. Cl.: F01N 13/18, B01D 46/10, F01N 3/021, F02M 26/06, F02M 26/35

(54) **FILTER ZUM ENTFERNEN VON PARTIKELN AUS EINEM FLUIDSTROM IN EINER FLUIDLEITUNG EINER BRENNKRAFTMASCHINE**

(30) Priorität: 17.12.2015 DE 102015225732
(71) Anmelder: VOLKSWAGEN AKTIENGESELLSCHAFT, 38440 Wolfsburg (DE)
(72) Erfinder: Car, Onur Ulas, 10115 Berlin (DE)

(57) **Zusammenfassung**

Es wird ein Filter (30) zum Entfernen von Partikeln aus einem Fluidstrom in einer Fluidleitung (28) einer Brennkraftmaschine (12) offenbart. Der Filter (30) umfasst ein Trägerelement (32), ein Halteelement (34) und ein Filterelement (36). Das Filterelement (36) ist zwischen dem Trägerelement (32) und dem Halteelement (34) fixiert. Das Trägerelement (32) und das Haltelement (34) weisen jeweils wenigstens eine Öffnung auf, und das zwischenliegende Filterelement (36) überdeckt die Öffnungen. Dabei sind das Trägerelement (32) und das Halteelement (34) durch wenigstens eine Materialauslassung (40) im Filterelement (36) hindurch stoffschlüssig verbunden.

## Beschreibung

Die Erfindung betrifft einen Filter zum Entfernen von Partikeln aus einem Fluidstrom in einer Fluidleitung einer Brennkraftmaschine mit den Merkmalen gemäß dem Oberbegriff des Anspruchs 1.

Beim Betrieb von Brennkraftmaschinen, insbesondere bei magerlauffähigen Brennkraftmaschinen, können bei der Verbrennung neben Abgasen auch Rußpartikel entstehen. Die Rußpartikel gelangen mit dem Fluidstrom in die Abgasanlage der Brennkraftmaschine und können gegebenenfalls auch durch Fluidleitungen in die Frischluftanlage beziehungsweise zurück in die Brennkammern transportiert werden. Um den Einfluss von Rußpartikeln auf die Brennkraftmaschine zu verringern, gelangen verbreitet Filter in den Fluidleitungen von Brennkraftmaschinen zum Einsatz. Die Ausgestaltungen von Filtern in Fluidleitungen von Brennkraftmaschinen werden durch die vorhandenen Drücke und Temperaturen bestimmt. In der Regel ist eine große Beständigkeit in einem weiten Druckintervall und über ein großes Temperaturintervall gewünscht. Dadurch sind die Herstellung und die Montage aufwändiger als bei Fluidleitungen in Maschinen mit geringeren Temperatur- und Druckschwankungen. Dies führt unter anderem zu der Anforderung, einen Filter dauerhaft und funktionstüchtig zu fixieren.

Aus dem Dokument WO 2012/000852 A1 ist es für Filter in Abgasanlagen von Brennkraftmaschinen bekannt, an der Durchlassfläche gewölbte Träger- und Haltelemente mit korrespondierenden Sieböffnungen in Träger- und Halteelement in die Abgasrückführleitung einzubauen. Ein Metallvlies zwischen Träger- und Haltelement filtert kleine Partikel aus dem Fluidstrom. Die doppelte Siebkonstruktion und die gegen den Fluidstrom gewölbte Durchlassfläche sorgen für eine erhöhte Stabilität unter Beaufschlagung mit dem Fluidstrom und vermeiden unerwünschte Verformungen am Filter.

Außerdem ist im Dokument EP 2 589 423 A1 ein weiterer Filter für Abgasanlagen in Brennkraftmaschinen offenbart. Das Filterelement ist kraftschlüssig durch gegeneinander verlaufende Radien von Träger- und Haltelement fixiert. Das Filterelement ist ein stabiles Metallgewebe, welches ohne Siebkonstruktion in Träger- und Haltelement formstabil ist.

Bei den bekannten Lösungen wird konstruktiv und fertigungstechnisch aufwändig dafür Sorge getragen, dass sich kraftschlüssige Verbindungen nicht lösen beziehungsweise kein Schlupf von Rußpartikeln am Filter vorbei erfolgt.

Die Aufgabe der vorliegenden Erfindung ist es, eine formerhaltende und dauerhafte Fixierung für Filterelemente zwischen Trägerelement und Haltelement bereitzustellen.

Erfindungsgemäß wird die Aufgabe durch einen Filter zum Entfernen von Partikeln aus einer Fluidleitung einer Brennkraftmaschine mit den Merkmalen gemäß Anspruch 1 gelöst. Vorteilhafte Weiterbildungen der Erfindung sind in den abhängigen Ansprüchen charakterisiert.

Erfindungsgemäß umfasst ein Filter zum Entfernen von Partikeln aus einer Fluidleitung, insbesondere aus einem Fluidstrom durch eine oder in einer Fluidleitung, einer Brennkraftmaschine, ein Trägerelement, ein Halteelement und ein Filterelement, insbesondere ein flächiges oder plattenförmiges Filterelement. Das Filterelement ist zwischen dem Trägerelement und dem Halteelement fixiert oder aufgenommen, wobei das Trägerelement und das Haltelement jeweils wenigstens eine Öffnung, bevorzugt jeweils genau eine Öffnung, zur Durchströmung mit einem Fluid aufweisen und das zwischenliegende Filterelement die Öffnungen überdeckt. Bei diesem Filter sind das Trägerelement und das Haltelement durch wenigstens eine Materialauslassung im Filterelement hindurch stoffschlüssig verbunden.

Die Öffnung dient bei Einsatz des Filters als Durchströmungsöffnung für das Fluid. Die Materialauslassung kann insbesondere auch als Aussparung, Öffnung oder Loch bezeichnet werden. Die Materialauslassung ist nicht erst aufgrund der stoffschlüssigen Verbindung des Trägerelements und des Halteelements entstanden, sondern vor der Verbindung im Filterelement vorhanden. Die Materialauslassung kann eine in verschiedenen Ausführungsform unterschiedliche Formgebung aufweisen. Zum Beispiel kann sie kreisrund, oval, dreieckig, rechteckig, mehreckig oder dergleichen sein. Die Materialauslassung kann in bestimmten Ausführungsformen auch eine Kerbe sein.

Zur stoffschlüssigen Verbindung können das Filterelement und das Haltelement beispielsweise auf das Trägerelement aufgelegt werden oder in das Trägerelement hineingelegt werden. Durch die erfindungsgemäße Materialauslassung wird das Material des Filterelements in vorteilhafter Weise nicht durch den Verbindungsprozess oder die Verbindung an sich beschädigt oder verformt. Das Filterelement kann im Wesentlichen spannungsfrei und/oder fluiddicht aufgenommen oder verbaut sein.

Für die stoffschlüssige Verbindung hat in einer besonders bevorzugten Ausführungsform das Halteelement wenigstens einen konvexen Verbindungsabschnitt, welcher wenigstens teilweise in die wenigstens eine Materialauslassung im Filterelement hineinragt und das Trägerelement kontaktiert. Alternativ dazu hat für die stoffschlüssige Verbindung in einer bevorzugten Ausführungsform das Trägerelement wenigstens einen konvexen Verbindungsabschnitt, welcher wenigstens teilweise in die wenigstens eine Materialauslassung im Filterelement hineinragt und das Halteelement kontaktiert. Der konvexe Verbindungsabschnitt kann zum Beispiel eine Materialauftragung oder eine Ausbuchtung des Materials des Halterelements beziehungsweise des Trägerelements sein. Es ist ein Vorteil, wenn der konvexe Verbindungsabschnitt zur stoffschlüssigen Verbindung bereits mit dem Trägerelement beziehungsweise des Halteelements in Kontakt steht. In diesem Fall können Trägerelement und Halteelement über den Verbindungsabschnitt spannungsfrei verbunden werden.

In einer konkreten Ausgestaltung ist der wenigstens eine konvexe Verbindungsabschnitt eine Ausbuchtung des Halteelements oder des Trägerelements, welche in die wenigstens eine Materialauslassung im Filterelement hineinragt. Eine Ausbuchtung hat den Vorteil, dass Sie durch Dehnung des Haltelements, zum Beispiel durch Tiefziehen oder Pressen, besonders einfach zu fertigen ist.

Der konvexe Verbindungsabschnitt kann eine in verschiedenen Ausführungsformen unterschiedliche Formgebung aufweisen. Insbesondere kann der konvexe Verbindungsabschnitt ein Plateau und/oder eine Sicke am Trägerelement und/oder am Haltelement sein. Er kann kreisrund, oval, dreieckig, rechteckig, mehreckig oder dergleichen sein. Es ist besonders vorteilhaft, wenn die Geometrie des konvexen Verbindungsabschnitts an die Geometrie der Materialauslassung angepasst, insbesondere formähnlich oder formgleich ist.

In einer vorteilhaften Ausführungsform ragen das Halteelement und das Trägerelement über wenigstens einen Teil eines Randes des Filterelements hinaus und kontaktieren sich an wenigsten einer Kontaktfläche oder Stelle direkt oder unmittelbar. In besonders bevorzugter Ausführung ragen das Haltelement und das Trägerelement über im Wesentlichen den gesamten Rand des Filterelements hinaus. Bevorzugt besteht über den gesamten Umlauf des Randes ein fluiddichter Kontakt zwischen dem Halteelement und dem Trägerelement, beispielsweise aufgrund eines Formschlusses oder Kraftschlusses. Durch diese Kontaktierung wird die Durchlassmenge des Fluidstroms am äußeren Rand des Filterelements vorteilhaft reduziert. Der fluiddichte Kontakt kann darüber hinaus im Wesentlichen kraftfrei sein.

In besonders bevorzugter Ausführung kann eine der wenigstens einen stoffschlüssigen Verbindungen zwischen dem Halteelement und dem Trägerelement eine Schweißverbindung, insbesondere eine Punktschweißverbindung, sein. Der wesentliche Vorteil einer Schweißverbindung ist ihre Zugfestigkeit gegenüber den von der Strömung des Fluids verursachten Kräften in den Fluidverbindungen von Brennkraftmaschinen. Alternativ dazu oder darüber hinaus kann die stoffschlüssige Verbindung eine Lötverbindung oder eine Klebeverbindung sein.

In einer vorteilhaften Ausführungsform ist das Filterelement im Wesentlichen vorspannungsfrei zwischen dem Halteelement und dem Trägerelement aufgenommen.
Durch eine vorspannungsfreie Aufnahme des Filterelements werden Beschädigungswahrscheinlichkeiten des Filterelements bei Montage und im Betrieb der Brennkraftmaschine verringert.

Eine Ausführungsform, bei welcher das Halteelement und das Trägerelement Materialen mit im Wesentlichen demselben Wärmeausdehnungskoeffizienten aufweisen, ist auch vorteilhaft. Dadurch wird eine Kräfteentwicklung auf die stoffschlüssige Verbindung zwischen dem Trägerelement und dem Haltelement begrenzt, die andernfalls zum Schaden an der Verbindung führen kann. Zu diesem Zweck müssen die Wärmeausdehnungskoeffizienten über den gesamten Betriebstemperaturbereich der Brennkraftmaschine im Wesentlichen gleich sein. Ein typischer Betriebstemperaturbereich kann sich von - 40 °C bis hin zu 800 °C ausdehnen.

Zur Befestigung ist eine vorteilhafte Ausführungsform derart ausgebildet, dass das Trägerelement an einer dem Filterelement abgewandten Seite einen die wenigstens eine Öffnung umlaufenden Kragen aufweist, welcher mit einem Flansch abdichtend zwischen zwei Abschnitten einer Fluidleitung, insbesondere lösbar verbunden, aufnehmbar ist. Der Kragen ermöglicht eine bauraumsparende Aufnahme zwischen den zwei Abschnitten der Fluidleitung und eine einfache, schnelle und lösbare Montage.

In einer Gruppe von bevorzugten Ausführungsformen ist das Filterelement ein Metallgitter, insbesondere en Metallgewebe, zum Beispiel ein Drahtgitter. Alternativ dazu kann ein Metallgitter auch ein Metallvlies, insbesondere mit Stützgewebe oder Stützgestricke sein. Das Filterelement, insbesondere Metallgitter, kann auch in einer Weiterentwicklung katalytisch aktiv, zum Beispiel für Kohlenwasserstoffe oxidationskatalytisch, beschichtet sein. Vorteilhafterweise sind Metallgitter unter den Druckbedingungen in den Fluidleitungen einer Brennkraftmaschine formstabil.

Im Zusammenhang der Erfindung steht auch eine Brennkraftmaschine. Eine erfindungsgemäßen Brennkraftmaschine weist eine Abgasanlage mit wenigstens einer Fluidleitung auf, in welcher ein Filter mit Merkmalen oder Merkmalskombinationen gemäß dieser Darstellung aufgenommen ist. Diese Anordnung hat den Vorteil, dass Partikel von dem Filter aufgefangen werden und nicht stromab des Filters gelangen können. Die Brennkraftmaschine kann eine fremdgezündete oder eine (bevorzugt) selbstzündende Brennkraftmaschine sein. Die selbstzündende Brennkraftmaschine kann eine Dieselbrennkraftmaschine und/oder eine magerlauffähige Brennkraftmaschine sein. Die Brennkraftmaschine kann eine Traktionsmaschine eines Fahrzeugs, insbesondere eines gleislosen Landfahrzeugs sein. Die Brennkraftmaschine kann aufladbar sein, insbesondere kann die Brennkraftmaschine eine Aufladegruppe, zum Beispiel mit wenigstens einem, bevorzugt genau einem Abgasturbolader, aufweisen. Die Fluidleitung mit dem erfindungsgemäßen Filter ist bevorzugt eine Abgasrückführungsleitung.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: eine Topologie einer Ausführungsform einer Brennkraftmaschine in einem Fahrzeug mit einem erfindungsgemäßen Filter,
- Figur 2: eine schematische Darstellung einer bevorzugten Ausführungsform des erfindungsgemäßen Filters,
- Figur 3: eine Schnittansicht der bevorzugten Ausführungsform der Figur 2, und
- Figur 4: Detailansichten in Teilbildern A, B und C der bevorzugten Ausführungsform des erfindungsgemäßen Filters.

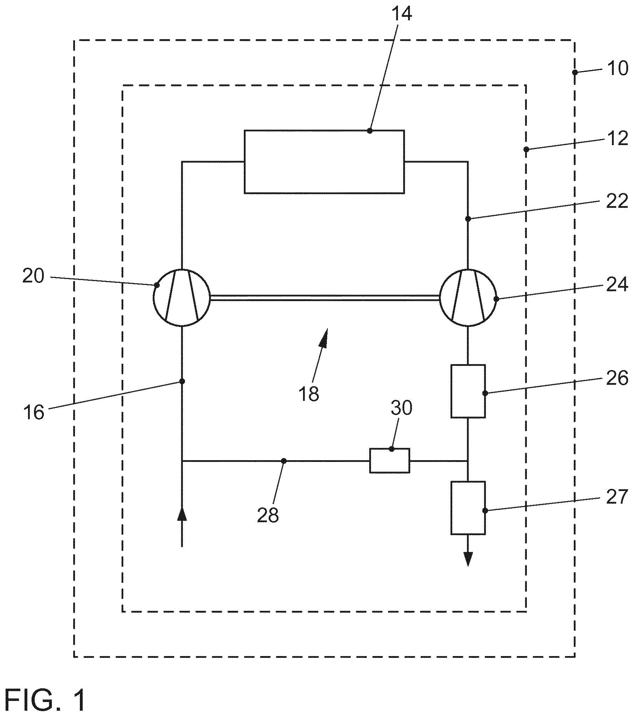

Figur 1 zeigt eine Topologie einer Ausführungsform einer Brennkraftmaschine 12 in einem Fahrzeug 10 mit einem erfindungsgemäßen Filter 30. Die Brennkraftmaschine 12 ist bevorzugt eine selbstzündende Brennkraftmaschine. Die Brennkraftmaschine 12 ist mittels eines Abgasturboladers 18 aufladbar und über eine Abgasrückführung, konkret eine Niederdruckabgasrückführung, mittels einer Fluidleitung 28 verfügt. Einem Motorblock 14, bevorzugt einem Hubkolbenmotor mit drei, vier oder sechs Brennkammern oder Zylindern, wird durch eine Frischgasanlage 16 Luft, gegebenenfalls vermischt mit rückgeführtem Abgas, zugeführt. Die Luft wird mit einem Verdichter 20 des Abgasturboladers 18 komprimiert. Das aus den Brennkammern abgeführte Abgas gelangt in eine Abgasanlage 22, in welcher es zunächst eine Turbine 24 des Abgasturboladers 18 antreibt. Das entspannte Abgas strömt danach durch eine motornahe Abgasnachbehandlung 26.

Dabei wird im Rahmen der vorliegenden Erfindung mit dem Begriff "motornah" ein Abstand zwischen Zylinderauslass des Motorblocks 14 und Stirnfläche der motornahmen Abgasnachbehandlung 26 von höchstens 120 cm, insbesondere höchstens 100 cm, vorzugsweise höchstens 80 cm verstanden. In einer konkreten Ausführung beträgt der Abstand etwa 75 cm. Eine motornahe Anordnung bedeutet insbesondere, dass der Speicherkatalysator im Motorraum und/oder aufgenommen an der Brennkraftmaschine ("closed-coupled") angeordnet ist. Auf diese Weise kann die Abwärme der Brennkraftmaschine genutzt werden, um die Arbeitstemperaturen der motornahen Abgasnachbehandlung 26 zu erreichen. Bevorzugt umfasst die motornahe Abgasnachbehandlung 26 einen Oxidationskatalysator, eine Dosiereinrichtung für ein Stickoxidreduktionsmittel, einen Mischer und einen Partikelfilter, welcher reduktionskatalytisch beschichtet ist.

Stromab der motornahen Abgasnachbehandlung 26 verzweigt sich die Abgasanlage 22 in eine Endleitung mit einer Unterboden-Abgasnachbehandlung 27 und eine Fluidleitung 28, welche in dieser Ausführungsform eine Abgasrückführungsleitung darstellt und stromauf des Verdichters 20 in die Frischgasanlage 16 mündet.

Erfindungsgemäß weist die Fluidleitung 28 einen erfindungsgemäßen Filter 30 auf, mit welchem verhindert wird, dass nicht von der motornahen Abgasreinigung 26 umgesetzte Rußpartikel aus der Abgasanlage 22 in die Frischluftanlage 16 gelangen.

Eine Brennkraftmaschine 12 mit erfindungsgemäßem Filter 30 kann weitere Baugruppen und Bauteile aufweisen, welche hier in der Figur 1 nur aus Gründen einer vereinfachten Darstellung nicht gezeigt und in Konsequenz im Zusammenhang mit der Figur 1 nicht beschrieben worden sind. Beispielsweise können Fluidströme mittels Ventilen oder Drosseln in der Frischluftanlage und/oder der Abgasanlage gesteuert oder geregelt sein. In anderen Ausführungsformen können auch weitere Abgasrückführungsleitungen oder Aufladeeinrichtungen vorhanden sein. Die Brennkraftmaschine 12 kann insbesondere Teil eines Hybridantriebsaggregats, zum Beispiel mit einem oder mehreren Elektromotoren, sein.

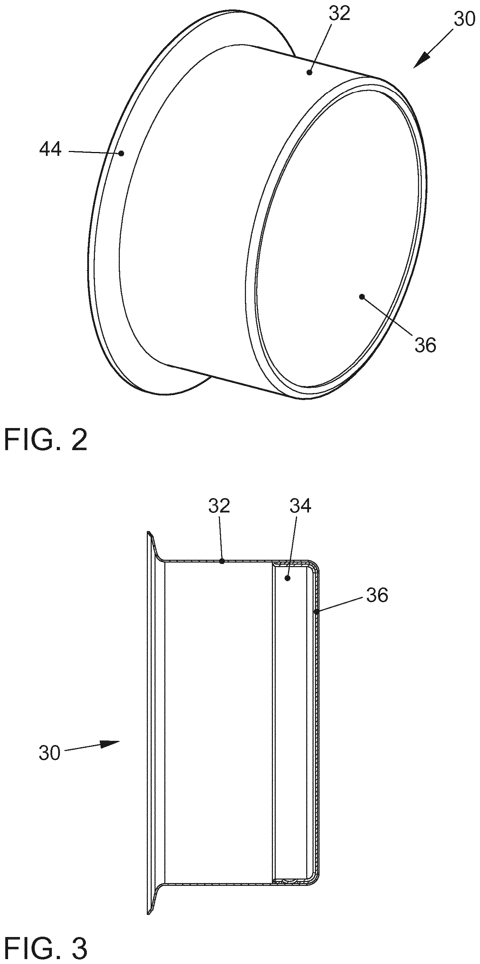

Figur 2 ist eine schematische Darstellung einer bevorzugten Ausführungsform des erfindungsgemäßen Filters 30. Der Filter 30 weist ein Trägerelement 32, eine in dieser Ansicht nicht sichtbares, innenliegendes Halteelement 34 (siehe Figur 3) und ein Filterelement 36 auf. Das Trägerelement 32 ist in dieser Ausführung im Wesentlichen hohlzylindrisch geformt und hat an beiden Stirnseiten jeweils eine im Wesentlichen kreisförmige Öffnung zur Durchströmung mit einem Fluid. An der dem Filterelement 36 abgewandten Stirnseite des Trägerelements 32 ist ein die Öffnung umlaufender Kragen 44 vorhanden. Der Kragen 44 dient zur fluiddichten Unterbringung zwischen zwei Abschnitten der Fluidleitung 28 in einem Flansch. Das Trägerelement 32 kann in dieser Ausführungsform als Rohrstutzen bezeichnet werden.

An der in dieser Ansicht der Figur 2 vorderen Stirnseite ist das Trägerelement 32 mit dem innenliegenden Halteelement 34 stoffschlüssig, konkret an einer Mehrzahl von einzelnen Verbindungsabschnitten, verbunden. Besonders bevorzugt kann es sich hier um eine Schweißverbindung, insbesondere um eine oder mehrere Punktschweißverbindungen handeln. Zwischen dem Trägerelement 32 und dem Halteelement 34 ist das Filterelement 36 angeordnet und überdeckt die Öffnung des Trägerelements 32. Das Halteelement 34 kann in dieser Ausführungsform auch als Halter oder Haltering bezeichnet werden.

In der Figur 3 ist eine Schnittansicht der bevorzugten Ausführungsform der Figur 2 in einer Ebene senkrecht zur Strömungsrichtung eines Fluids durch den Filter 30 gezeigt. Das Filterelement 36 ist in dieser Ausführungsform flächig oder plattenförmig ausgestaltet. Mit anderen Worten die Länge und die Breite sind sehr viel größer als die Dicke des Filterelements 36. Das flächige Filterelements 36 ist so dimensioniert, dass es eine Öffnung des Trägerelements 32 überspannt und sich noch über den inneren Rand, entlang der inneren Mantelfläche des Trägerelements 32 hinaus erstrecken. Des Weiteren ist das Filterelement 36 wie in dieser Figur 3 gezeigt bevorzugt eben in den Bereichen ausgeführt, in welchen es die Öffnung des Trägerelements 32 überspannt. Auf dem Filterelement 36 liegt von innen das Halteelement 34 auf. Dieses ist ringförmig ausgeführt und weist eine an die Öffnung des Trägerelements 32 angepasste Öffnung zur Durchströmung mit einem Fluid auf. Das Halteelement 34 erstreckt sich des Weiteren über das Filterelement 36 hinaus über den inneren Rand, entlang der inneren Mantelfläche des Trägerelements 32.

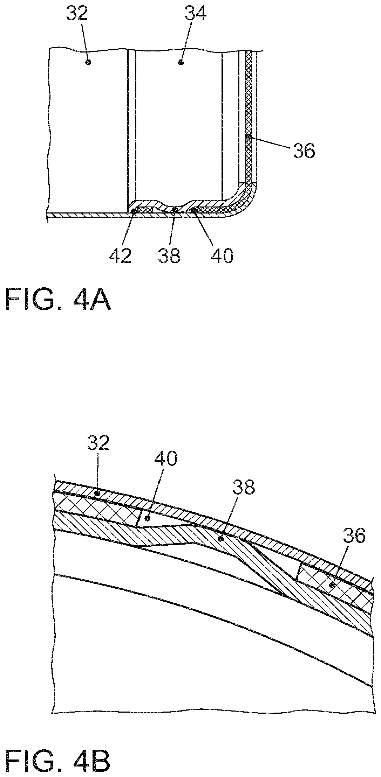

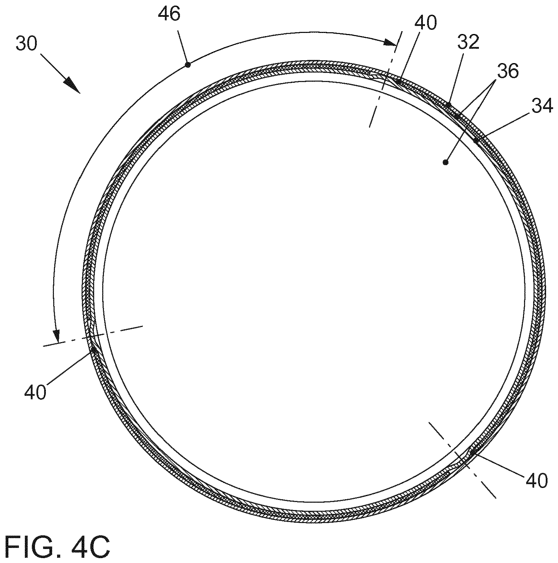

In der Figur 4 sind Detailansichten in Teilbildern A, B und C der bevorzugten Ausführungsform des erfindungsgemäßen Filters gemäß Figur 2 dargestellt.

Das Teilbild A der Figur 4 zeigt einen vergrößerten Ausschnitt des Randes der Stirnseite des Trägerelements 32, an welcher mittels des Halteelements 34 das Filterelement 36 aufgenommen ist. Erfindungsgemäß sind eine Mehrzahl von Materialauslassungen 38, zum Beispiel drei oder fünf Aussparungen oder Löcher, im Filterelement 36 vorhanden. Konkret befindet sich die Materialauslassung 38 in einem von innen an der Mantelfläche des Trägerelements 32 anliegenden Bereich. In die im Teilbild A gezeigt Materialauslassung 38 hinein erstreckt sich ein konvexer Verbindungsabschnitt 40, hier ein von einer Sicke begrenztes Plateau.

In dem Bereich, in welchem das Halteelement 34 das Filterelement 36 überragt, erstreckt sich das Halteleement 34 in Richtung des Trägerelements 32 nach außen und endet in einer Kontaktfläche 42 zwischen dem Trägerelement 32 und dem Haltelement 34. Dieser Abschluss trägt zur Fluiddichtigkeit der Verbindung bei. An der Kontaktfläche können darüber hinaus das Trägerelement 32 und das Halteelement 34 ebenfalls stoffschlüssig verbunden sein, zum Beispiel mittels einer Mehrzahl von Schweißpunkten.

Im Teilbild B der Figur 4 ist in weiterer Vergrößerung die Materialauslassung 38 im Filterelement 36 und der konvexe Verbindungsabschnitt 40, hier das von einer Sicke begrenzte Plateau, des Haltelements 34 zu sehen. Der konvexe Verbindungsabschnitt 40 ragt durch die Materialauslassung 38 derart hindurch, dass er von innen am Trägerelement 32 anliegt. Die auf diese Weise unmittelbar aneinander grenzenden Flächen des Trägerelements 32 und des konvexen Verbindungsabschnitt 40 des Halteelements 34 sind erfindungsgemäß stoffschlüssig, hier mittels einer Schweißung, insbesondere Punktschweißung, miteinander verbunden.

Das Teilbild C der Figur 4 zeigt eine Schnittansicht senkrecht zur Strömungsrichtung eines Fluids durch den Filter 30 gemäß Figur 2, so dass das Filterelement 36 hier als kreisförmige Fläche zu sehen ist. In dieser Ausführungsform weist der Filter 30 mehrere, hier beispielhaft drei Materialauslassungen 38 im Filterelement 36 auf, so dass mehrere, hier beispielhaft drei konvexe Verbindungsabschnitte 40 des Halteelements 34 das Filterelement 30 durch die Materialauslassungen 38 durchragen und von innen das Trägerelement 32 an hier beispielhaft drei Stellen kontaktieren. In erfindungsgemäßer Weise sind an diesen drei Stellen das Trägerelement 32 und das Halteelement 34 miteinander verbunden. Die mehreren axialen Verbindungsabschnitte 40 weisen zueinander einen Winkelabstand in azimuthaler Richtung auf. Der Winkel 46 zwischen zwei winkelbenachbarten axialen Verbindungsabschnitten 40 beträgt in etwa 120 Grad; die axialen Verbindungsabschnitte 40 sind im Wesentlichen gleichmäßig in azimuthaler Richtung voneinander beabstandet.

### BEZUGSZEICHENLISTE

- 10: Fahrzeug
- 12: Brennkraftmaschine
- 14: Motorblock
- 16: Frischgasanlage
- 18: Abgasturbolader
- 20: Verdichter
- 22: Abgasanlage
- 24: Abgasturbine
- 26: motornahe Abgasnachbehandlung
- 27: Unterboden-Abgasnachbehandlung
- 28: Fluidleitung
- 30: Filter
- 32: Trägerelement
- 34: Halteelement
- 36: Filterelement
- 38: konvexer Verbindungsabschnitt
- 40: Materialauslassung
- 42: Kontaktfläche
- 44: Kragen
- 46: Winkel

## Patentansprüche

1. Filter (30) zum Entfernen von Partikeln aus einem Fluidstrom in einer Fluidleitung (28) einer Brennkraftmaschine (12), umfassend ein Trägerelement (32), ein Halteelement (34) und ein Filterelement (36), wobei das Filterelement (36) zwischen dem Trägerelement (32) und dem Halteelement (34) fixiert ist, wobei das Trägerelement (32) und das Haltelement (34) jeweils wenigstens eine Öffnung aufweisen und das zwischenliegende Filterelement (36) die Öffnungen überdeckt, **dadurch gekennzeichnet**
**dass** das Trägerelement (32) und das Halteelement (34) durch wenigstens eine Materialauslassung (40) im Filterelement (36) hindurch stoffschlüssig verbunden sind.

2. Filter (30) nach Anspruch 1,
**dadurch gekennzeichnet**
**dass** das Halteelement (34) wenigstens einen konvexen Verbindungsabschnitt (38) aufweist, welcher wenigstens teilweise in die wenigstens eine Materialauslassung (40) im Filterelement (36) hineinragt und das Trägerelement (32) kontaktiert, und/oder das Trägerelement (32) wenigstens einen konvexen Verbindungsabschnitt (38) aufweist, welcher wenigstens teilweise in die wenigstens eine Materialauslassung (40) im Filterelement (36) hineinragt und das Halteelement (34) kontaktiert.

3. Filter (30) nach Anspruch 2,
**dadurch gekennzeichnet**
**dass** der wenigstens eine konvexe Verbindungsabschnitt (38) eine Ausbuchtung des Halteelements (34) oder des Trägerelements (32) ist, welche in die wenigstens eine Materialauslassung (40) im Filterelement (36) hineinragt.

4. Filter (30) nach einem der vorstehenden Ansprüche,
**dadurch gekennzeichnet**
**dass** das Halteelement (34) und das Trägerelement (32) über wenigstens einen Teil eines Randes des Filterelements (36) hinausragen und sich an wenigstens einer Kontaktfläche (42) direkt kontaktieren.

5. Filter (30) nach einem der vorstehenden Ansprüche,
**dadurch gekennzeichnet**
**dass** wenigstens eine der wenigstens einen stoffschlüssigen Verbindung zwischen dem Halteelement (34) und dem Trägerelement (32) eine Schweißverbindung ist.

6. Filter (30) nach einem der vorstehenden Ansprüche,
**dadurch gekennzeichnet**
**dass** das Filterelement (36) im Wesentlichen vorspannungsfrei zwischen dem Halteelement (34) und dem Trägerelement (32) aufgenommen ist.

7. Filter (30) nach einem der vorstehenden Ansprüche,
**dadurch gekennzeichnet**
**dass** das Haltelement (34) und das Trägerelement (32) Materialen mit im Wesentlichen demselben Wärmeausdehnungskoeffizienten aufweisen.

8. Filter (30) nach einem der vorstehenden Ansprüche,
**dadurch gekennzeichnet**
**dass** das Trägerelement (32) an einer dem Filterelement (36) abgewandten Seite eine die wenigstens eine Öffnung umlaufenden Kragen (44) aufweist, welcher mit einem Flansch abdichtend zwischen zwei Abschnitten einer Fluidleitung (28) aufnehmbar ist.

9. Filter (30) nach einem der vorstehenden Ansprüche,
**dadurch gekennzeichnet**
**dass** das Filterelement (36) ein Metallgitter ist.

10. Brennkraftmaschine (12) mit einer Abgasanlage (22) mit wenigstens einer Fluidleitung (28),
**gekennzeichnet durch**
ein Filter (30) gemäß einem der vorstehenden Ansprüche in der Fluidleitung (28) der Abgasanlage (22).
